# FASCICULE DE BREVET EUROPEEN

(11) **EP 0 913 020 B1**
(45) Date de publication et mention de la délivrance du brevet: **25.09.2002**
(21) Numéro de dépôt: 97932890.3
(22) Date de dépôt: 10.07.1997
(51) Int. Cl.: H02J 13/00, G05B 19/042

(54) **APPAREILLAGE ELECTRIQUE DEBROCHABLE COMPORTANT UNE PARTIE FIXE ET UNE PARTIE AMOVIBLE DEBROCHABLE INSTALLEE DANS LA PARTIE FIXE**
ABKLEMMBARES ELEKTRISCHES GERÄT MIT EINER ORTSFESTEN EINHEIT UND EINER ENTFERNBAREN UND ABKLEMMBAREN EINHEIT WELCHE IN DER ORTSFESTEN EINHEIT INSTALLIERT IST
UNPLUGGABLE ELECTRICAL EQUIPMENT COMPRISING A FIXED UNIT AND A REMOVABLE AND UNPLUGGABLE UNIT BEING INSTALLED IN THE FIXED UNIT

(30) Priorité: 16.07.1996 FR 9609128
(43) Date de publication de la demande: 06.05.1999
(73) Titulaire: Schneider Electric Industries SAS, 92500 Rueil-Malmaison (FR)
(72) Inventeur: WEYNACHTER, Luc, F-38100 Grenoble (FR)
(74) Mandataire: Ritzenthaler, Jacques
(86) Numéro de dépôt international: FR9701267
(87) Numéro de publication internationale: WO98002951

(56) Documents cités:
- EP-A- 0 414 657
- EP-A- 0 466 152
- EP-A- 0 593 322
- DE-A- 4 013 491
- DE-A- 4 425 876
- FR-A- 2 663 151
- FR-A- 2 728 712
- GB-A- 2 286 904
- US-A- 4 497 038

## Description

L'invention concerne appareillage électrique débrochable comportant :
- une partie fixe formant un support et connectée à un réseau de distribution électrique,
- une partie amovible débrochable installée dans la partie fixe et comportant au moins un appareil électrique de coupure susceptible d'être connecté au réseau de distribution électrique à travers la partie fixe, et une unité de traitement associée audit appareil électrique de coupure et recevant des signaux représentatifs de courants électriques, et
- des premiers moyens de connexion susceptibles d'être facilement connectés et déconnectés pour connecter l'appareil électrique de coupure de la partie amovible à la partie fixe et au réseau de distribution électrique.

Des appareils électriques connus comportent une partie fixe connectée de manière permanente à un réseau électrique et une partie amovible pouvant être facilement connectée et déconnectée à la partie fixe. Dans le cas d'un disjoncteur, la partie fixe est un châssis ou un support comportant des connecteurs fixes reliés au réseau électrique. La partie amovible est un disjoncteur comportant des plots de raccordement destinés à être connectés aux connecteurs fixes.

De manière connue, les parties amovibles telles que des disjoncteurs, des contacteurs ou des interrupteurs, comportent des circuits auxiliaires de commande ou de signalisation. Ces circuits auxiliaires sont connectés à des circuits de contrôle ou de commandé, à travers des contacts débrochables disposés entre la partie fixe et la partie amovible.

Les disjoncteurs comportent des unités de traitement électroniques munies de dispositifs de réglage. Lesdits réglages concernent notamment des courbes de déclenchement qui nécessitent un paramétrage de seuils de courant et de valeurs de temporisation. Lorsque ces réglages sont complexes, les unités de traitement gardent en mémoire les paramètres de réglage.

Il est également connu de mettre des dispositifs de communication dans des appareils électriques. Ces dispositifs sont utilisés généralement pour transmettre ou recevoir des informations concernant l'état de l'appareil, les courants circulant dans le réseau, ou des ordres de commande.

Les dispositifs de communication sont disposés sur la partie amovible et connectés, notamment, à un déclencheur électronique. Lorsque l'appareil est un disjoncteur, le dispositif de communication est connecté à un réseau de communication à travers des contacts débrochables disposés entre la partie fixe et la partie amovible. Le réseau de communication est de préférence un bus à deux fils.

Lorsque plusieurs dispositifs de communication sont connectés au bus de communication, chaque dispositif comporte un moyen d'adressage de manière à identifier les messages qu'il émet ou qu'il reçoit. Les moyens d'adressage sont par exemple des roues codeuses, des blocs de plusieurs contacts ou des mémoires électroniques.

Les parties amovibles de l'appareillage électrique sont destinées à être facilement déconnectées et remplacées par un personnel spécialisé dans l'entretien des installations électriques. Ce personnel doit pouvoir remplacer les appareils électriques, tels que des disjoncteurs, de manière simple et sûre sans avoir à intervenir sur des réglages complexes des disjoncteurs électroniques ou les dispositifs de communication.

Un exemple de disjoncteur débrochable comportant une commande mécanique à distance est décrit dans la demande de brevet FR2663151. Ce document décrit des détails mécaniques de liaison entre un disjoncteur et sa commande et non les problèmes de configuration lors du remplacement de la commande.

La demande de brevet FR2728712 décrit un dispositif de distribution d'énergie électrique comportant un appareil de coupure dans la partie fixe. La partie amovible sert à paramétrer la l'unité de traitement de la partie fixe. Ce document ne décrit pas de moyens d'adressage.

Le document EP-A-0414657 décrit un appareil électrique mais ne concerne pas les problèmes de configuration lors du remplacement de la partie amovible dans une partie fixe. Le document GB-A-2286904 décrit un appareillage électrique comprenant une mémoire pour être programmée à l'aide d'une unité de programmation externe débrochable.

Cependant, les appareils comportant des déclencheurs complexes ou des dispositifs de communication nécessitent une intervention à chaque remplacement. Dans cette intervention, il y a principalement le rétablissement de l'ensemble des réglages de l'unité de traitement et notamment la configuration de l'adresse de communication.

L'invention a pour but un appareillage électrique débrochable comportant une partie amovible ne nécessitant pas d'intervention manuelle de configuration, lors du remplacement de ladite partie amovible.

Selon l'invention, l'appareillage électrique comporte :
appareillage électrique caractérisé en ce qu'il comporte :
   - des moyens de paramétrage disposés dans la partie fixe pour paramétrer l'unité de traitement de la partie amovible, lesdits moyens de paramétrage fournissant à l'unité de traitement des paramètres de fonctionnement,
   - des moyens de liaison pour relier lesdits moyens de paramétrage de la partie fixe à ladite unité de traitement de la partie amovible,
   - un premier circuit de communication situé dans la partie amovible et connecté à l'unité de traitement et au réseau de communication à travers des moyens de connexion susceptibles d'être facilement connectés et déconnectés,
   - des premiers moyens d'adressage situés dans la partie amovible et connectés au premier circuit de communication, lesdits premiers moyens d'adressage fournissant une première adresse au premier circuit de communication, et
   - un dispositif d'adressage fixe, situés dans la partie fixe, destiné à être connecté au premier circuit de communication de la partie amovible pour fournir une seconde adresse au premier circuit de communication,
ledit premier circuit de communication utilisant en priorité ladite seconde adresse si elle est valide ou ladite première adresse si ladite seconde adresse n'est pas valide.

De préférence, lesdits moyens de paramétrage comportent des premiers moyens de mémorisation.

Selon un mode de réalisation particulier de l'invention, lesdits moyens de paramétrage fournissent des paramètres représentatifs de seuils de courant et de valeurs de temporisations.

Avantageusement, l'unité de traitement fournit aux premiers moyens de mémorisation des paramètres à mémoriser avant la déconnexion des premiers moyens de connexion.

L'unité de traitement comporte des moyens pour traiter des fonctions de protection électrique.

Dans un mode de réalisation préférentiel de l'invention :
- le premier circuit de communication comporte une première et une seconde entrée d'adresse,
- les premiers moyens d'adressage situés dans la partie amovible sont connectés à la première entrée d'adresse du premier circuit de communication, lesdits premiers moyens d'adressage fournissant une première adresse au premier circuit de communication, et
- le dispositif d'adressage fixe comporte :
   - un second circuit de communication, situé dans la partie fixe, connecté au réseau de communication et comportant une sortie d'adresse connectée à la seconde entrée d'adresse du premier circuit de communication, le second circuit de communication fournissant une seconde adresse au premier circuit de communication, et
   - des seconds moyens d'adressage, situés dans la partie fixe, connectés au second circuit de communication de la partie fixe, lesdits seconds moyens d'adressage fournissant une troisième adresse au second circuit de communication.

De préférence, la seconde adresse fournie par le second circuit de communication au premier circuit de communication est identique à la troisième adresse fournie par les seconds moyens d'adressage au second circuit de communication.

Le premier circuit de communication comporte une adresse de communication et des moyens d'initialisation de ladite adresse de communication, les moyens d'initialisation initialisant l'adresse de communication en priorité à une valeur égale à la valeur de la seconde adresse reçue sur la seconde entrée d'adressage ou, si la seconde adresse n'est pas valide, à la valeur de la première adresse reçue sur la première entrée.

Dans des développements de l'invention, l'appareillage électrique comporte :
- des premiers contacts d'état situés dans la partie fixe et connectés au second circuit de communication,
- des seconds contacts d'état situés dans la partie amovible et connectés au premier circuit de communication, et /ou
- des seconds moyens de mémorisation situés dans la partie amovible et connectés au premier circuit de communication.

De préférence les premiers moyens de mémorisation sont situés dans la partie fixe et connectés au second circuit de communication.

Avantageusement, les premiers moyens de mémorisation reçoivent du réseau de communication des paramètres de fonctionnement initiaux.

De préférence, les premiers moyens de mémorisation mémorisent des paramètres de fonctionnement à chaque réglage de l'unité de traitement par des moyens de réglage.

La partie amovible est de préférence un disjoncteur de type débrochable.

Selon un procédé d'initialisation utilisé dans des appareils électriques selon l'invention,

Dans un procédé d'initialisation d'un circuit de communication d'un appareillage électrique comprenant une partie fixe et une partie amovible selon l'invention, un premier circuit de communication situé dans la partie amovible
- lit, dans une première étape, la valeur d'une seconde adresse d'un dispositif d'adressage fixe situé dans la partie fixe,
- contrôle, dans une seconde étape, la validité de la seconde adresse,
- charge, lors d'une troisième étape, une adresse de communication avec la valeur de la seconde adresse si ladite seconde adresse est valide,
- lit, dans une quatrième étape, la valeur d'une première adresse de moyens d'adressage situés dans la partie amovible si la seconde adresse n'est pas valide, et
- charge lors d'une cinquième étape, l'adresse de communication avec la valeur de la première adresse.

D'autres avantages et caractéristiques ressortiront plus clairement de la description qui va suivre, de modes particuliers de réalisation de l'invention, donnés à titre d'exemples non limitatifs, et représentés aux dessins annexés sur lesquels :
La figure 1 représente le schéma d'un appareillage électrique connu.
La figure 2 représente le schéma d'un appareillage électrique selon un premier mode de réalisation.
La figure 3 représente le schéma d'un appareillage électrique selon un second mode de réalisation.
Les figures 4 et 5 représentent les schémas d'un appareillage électrique en position déconnectée et connectée selon un mode de réalisation de l'invention.
La figure 6 montre un organigramme de l'initialisation d'un circuit de communication pouvant être utilisé dans le mode de réalisation des figures 4 et 5.
La figure 7 montre un organigramme de l'initialisation d'une unité de traitement pouvant être utilisé dans des appareillages selon des modes de réalisation de l'invention.
La figure 8 montre un schéma d'un appareillage électrique selon un mode de réalisation préférentiel de l'invention.

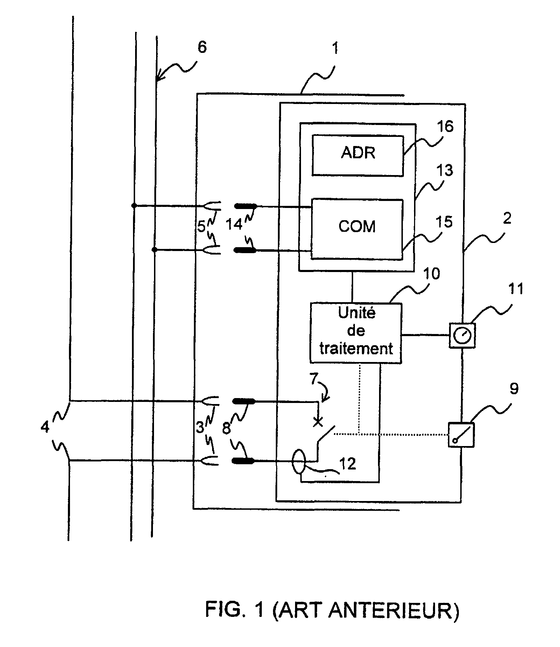

L'appareillage électrique de la figure 1 comporte une partie fixe 1 et une partie amovible 2. La partie fixe 1 comporte des connecteurs principaux 3 reliés de manière fixe à un réseau 4 de distribution électrique et des connecteurs auxiliaires 5 connectés à un réseau de communication 6. Le réseau 4 de distribution électrique alimentent une installation en courant continu ou alternatif, monophasé ou triphasé. Le réseau 6 de communication est, par exemple, un bus à deux fils relié à plusieurs appareils électriques et à une centrale de contrôle et de visualisation.

La partie amovible 2 comporte un appareil 7 de coupure électrique, par exemple un disjoncteur, un interrupteur ou un contacteur, connectés à des contacts principaux 8 de type embrochable. Les contacts 8 coopèrent avec les connecteurs 3 principaux de manière à être facilement connectés et déconnectés, notamment lors du remplacement de la partie fixe.

L'appareil 7 peut être associé à un dispositif de manoeuvre 9 et à une unité de traitement 10. L'unité de traitement comprend un dispositif 11 de réglage accessible par un utilisateur. Un capteur de courant 12 disposé en série avec les contacts principaux 8 fournit à l'unité de traitement des signaux représentatifs des courants circulant dans l'appareil 7.

L'unité de traitement peut recevoir de multiples paramètres de réglage. Ces réglages sont notamment des valeurs de seuils et de temporisations fournis, par exemple, par les dispositifs de réglages 11 qui peuvent comporter des commutateurs, des boutons poussoir ou des afficheurs.

Dans la partie amovible 2 un dispositif de communication 13 est connecté à l'unité de traitement 10 et à des contacts auxiliaires 14 de type embrochable. Les contacts 14 coopèrent avec les connecteurs 5 auxiliaires de manière à être facilement connectés et déconnectés. Le dispositif de communication 13 comporte un circuit de communication 15 connecté aux contacts 14 et à l'unité 13 et un dispositif d'adressage 16 connecté au circuit de communication. L'unité de traitement fournit des informations et reçoit des données et des ordres de fonctionnement passant par le circuit de communication.

Le circuit de communication utilise une adresse de communication ADCOM pour signer les messages qu'il émet et identifier les messages qu'il reçoit.

Les parties amovibles des appareils électriques doivent pouvoir être remplacées rapidement et configurées de manière simple et fiable

Dans les appareils connus comme celui de la figure 1, le remplacement d'une partie amovible nécessite le paramétrage des réglages de l'unité de traitement et du dispositif d'adressage. Pour garantir une bonne fiabilité du fonctionnement d'une installation électrique et diminuer le temps de mise en place de la partie amovible, il est préférable de ne pas avoir à configurer l'unité de traitement et/ou le dispositif de communication à chaque remplacement. Dans certains cas. l'unité de traitement peut avoir des paramètres qui ne sont pas accessibles directement par un personnel d'entretien.

De plus, l'adressage du circuit de communication de la partie amovible doit néanmoins pouvoir être configuré. L'adresse dépend de l'endroit où la partie amovible sera mise en place dans l'installation électrique. Généralement, dans les parties amovibles le dispositif d'adressage n'est pas facilement accessible. Cette disposition du dispositif d'adressage, complique le remplacement de la partie amovible.

Un appareillage selon l'invention comporte dans sa partie fixe des moyens de paramétrage pour paramétrer des éléments de la partie amovible tels que l'unité de traitement ou un circuit de communication.

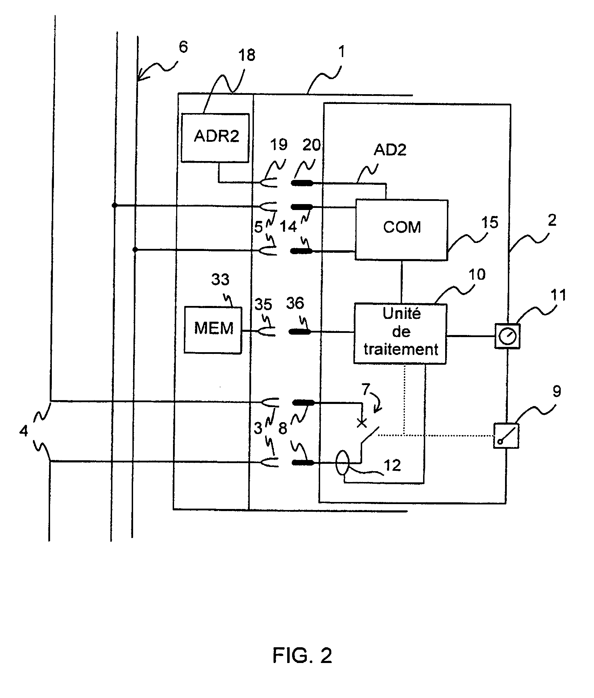

Dans un premier mode de réalisation représenté sur la figure 2, la partie fixe 1 comporte un premier dispositif de mémorisation 33 destiné à être relié à l'unité de traitement 10. La liaison entre le dispositif 33 et l'unité de traitement est réalisée par des connecteurs 35 et des contacts 36 susceptibles d'être facilement connectés et déconnectés.

Le dispositif 33 est utilisé pour paramétrer l'unité de traitement 10 lors d'un remplacement d'appareil. Lorsque l'appareil est un disjoncteur, elle contient, par exemple, des paramètres représentatifs de type d'appareil, de calibre nominal, de seuil de courant, de valeurs de temporisation, d'énergie ou de valeur de courant coupé.

Lors de la mise en place d'une nouvelle partie amovible, les paramètres sont transférés de la partie fixe vers la partie amovible. Ainsi. le remplacement d'un appareil ne nécessite plus de procédure de réglage complexe et la continuité de service de l'appareillage est assurée efficacement.

Dans les appareils communiquant, l'unité de traitement comporte ou est associé à un circuit de communication dont l'adressage doit être configuré.

Dans ce mode de réalisation , la partie fixe 1 comporte un dispositif d'adressage 18 destiné à fournir une adresse AD2 du circuit de communication 15. Le dispositif d'adressage 18 est connecté au circuit de communication à travers un connecteur 19 et un contact 20 susceptibles d'être facilement connectés et déconnectés.

La configuration du dispositif d'adressage 18 se fait lors de la mise en fonctionnement de l'installation électrique. Ensuite lors de chaque remplacement de la partie amovible, il n'est plus nécessaire de configurer le dispositif d'adressage.

Lorsque l'unité de traitement comporte le circuit de communication, les paramètres de fonctionnement peuvent être aussi bien des paramètres de réglage de l'unité de traitement que des paramètres d'adressage du circuit de communication. Le dispositif de mémorisation peut. dans ce cas, fournir aussi l'adresse du circuit de communication. Ainsi, les moyens de paramétrage peuvent concerner des moyens de mémorisation et/ou des moyens d'adressage.

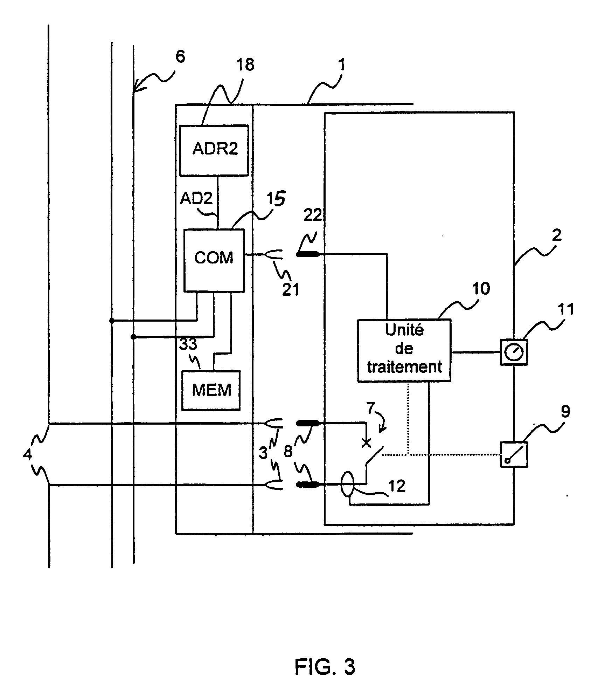

Dans un appareillage selon un second mode de réalisation , représenté sur la figure 3, la partie fixe 1 comprend un circuit de communication 16 et un dispositif d'adressage 18.

Dans ce mode de réalisation, le dispositif de mémorisation 33 comportant des paramètres à fournir à l'unité de traitement est connecté au circuit de communication disposé dans la partie fixe. Ainsi, les paramètres circulent à travers le circuit 16 et les connecteurs 21 et contacts 22.

Le circuit de communication 16 est directement connecté au réseau 6 de communication. Le dispositif d'adressage 18 fournit une adresse AD2 au circuit de communication 16. L'unité de traitement 10 de la partie amovible est connectée au circuit 16 de communication par des connecteurs 21 et des contacts 22 pouvant être facilement connectés et déconnectés.

Dans ce mode de réalisation , la partie amovible peut être facilement remplacée sans qu'il soit nécessaire d'intervenir sur le dispositif d'adressage 18 à chaque remplacement. L'unité de traitement de chaque partie amovible sera connectée au circuit 15 de communication de la partie fixe qui ne change pas et recevra les paramètres du dispositif 33.

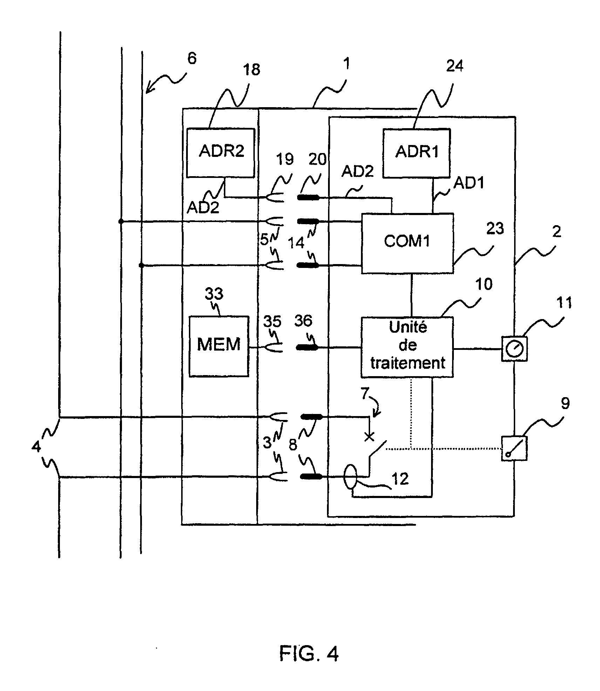

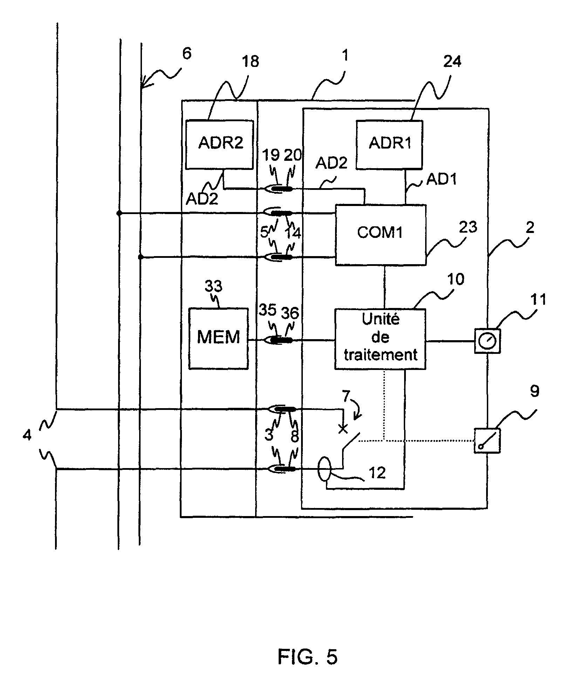

Un appareillage électrique selon un mode de réalisation de l'invention, est représenté sur les figures 4 et 5.

La partie amovible 2 comporte un premier circuit de communication 23 et un premier dispositif 24 d'adressage. Le premier circuit de communication 23 a une première et une seconde entrée d'adresse. Le premier dispositif d'adressage 24 connecté à la première entrée d'adresse du circuit 23 de communication lui fournit une première adresse AD1. La partie fixe 1 comporte un second dispositif 18 d'adressage. Le second dispositif d'adressage 18 connecté sur la seconde entrée d'adresse du premier circuit de communication 23 lui fournit une seconde adresse AD2.

La partie amovible 2, selon ce mode de réalisation peut aussi être utilisée de façon permanente. Lorsque la partie amovible 2 est associée à une partie fixe 1. le circuit de communication reçoit un signal d'adresse AD2 fourni par le second dispositif d'adressage. Cette adresse AD2 est utilisée en priorité par le circuit 23.

Dans les cas où la partie 2 n'est pas utilisée en tant que partie amovible mais installée de manière permanente, le signal d'adresse AD2 n'existe pas. Le circuit 23 détecte l'absence de l'adresse AD2 et choisit alors l'adresse AD1 fournie par le premier dispositif d'adressage 24.

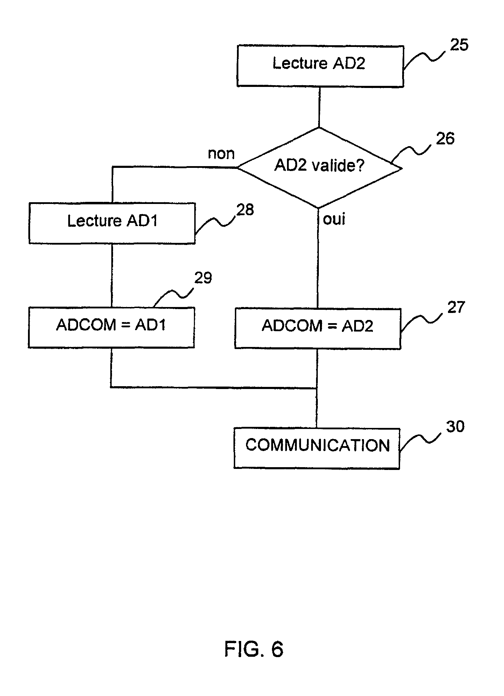

Un organigramme du traitement effectué lors du choix de l'adresse de communication ADCOM est représenté sur la figure 6.

Dans une première étape 25, le circuit de communication 23 lit sur sa seconde entrée d'adresse l'adresse AD2. Ensuite (étape 26), le circuit 23 vérifie la validité de l'adresse AD2. Si l'adresse AD2 est valide, l'adresse de communication ADCOM est chargée avec une valeur représentative de l'adresse AD2 (étape 27).

Si l'adresse AD2 est absente ou n'est pas valide, le circuit 23 lit, lors d'une étape 28, l'adresse AD1 sur sa première entrée d'adresse. Ensuite (étape 29) l'adresse de communication ADCOM est chargée avec une valeur représentative de l'adresse AD1.

Après avoir initialisé la valeur de l'adresse ADCOM, le circuit 23 utilise cette adresse dans des phases de communication 30.

L'initialisation de l'adresse ADCOM est faite pendant l'initialisation générale du circuit 23. Elle peut être aussi, par la suite, initialisée de manière cyclique.

De même, le transfert des paramètres de réglage de la partie fixe vers l'unité de traitement de la partie amovible ne sera effectif qu'en présence de dispositifs de mémorisation et de paramètres valides dans ce dispositif. Dans les autres cas, un réglage par défaut ou un réglage manuel par l'organe 11 sera utilisé pour paramétrer l'unité de traitement.

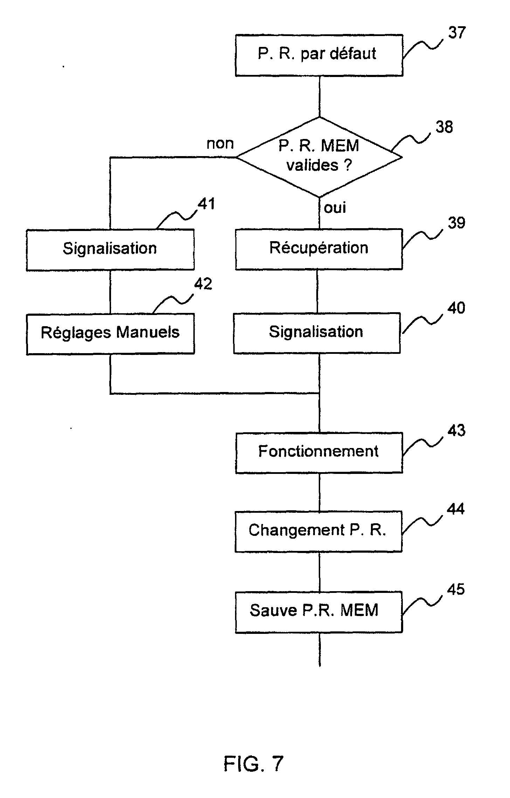

Un organigramme représentant le changement de paramètre est représenté sur la figure 7.

Lors de la mise en place de la partie amovible, à une étape 37, l'unité de traitement a des valeurs de réglage par défaut. Puis, un test de la présence ou de la validité de paramètres fournis par un dispositif de mémorisation de la partie amovible est effectué à une étape 38. Si les paramètres sont corrects, la récupération de ces paramètres est faite à une étape 39. Ensuite, à une étape 40, une signalisation de la récupération de paramètres est effectuée.

Si les paramètres sont absents ou ne sont pas valides, l'unité de traitement le signale à une étape 41 et un réglage manuel est nécessaire à une étape 42.

A une étape 43 l'unité de traitement fonctionne avec. selon le cas. des paramètres de réglage par défaut, des paramètres réglés manuellement ou des paramètres récupérés dans un dispositif de mémorisation de la partie amovible.

Lors d'une étape 44, les paramètres de réglages ou d'autres paramètres d'état et de fonctionnement peuvent changer automatiquement ou être changés par un utilisateur. Ces nouveaux paramètres sont alors sauvegardés, à une étape 45, dans le dispositif de mémorisation de la partie fixe pour une utilisation ultérieure, notamment lors du remplacement de la partie amovible.

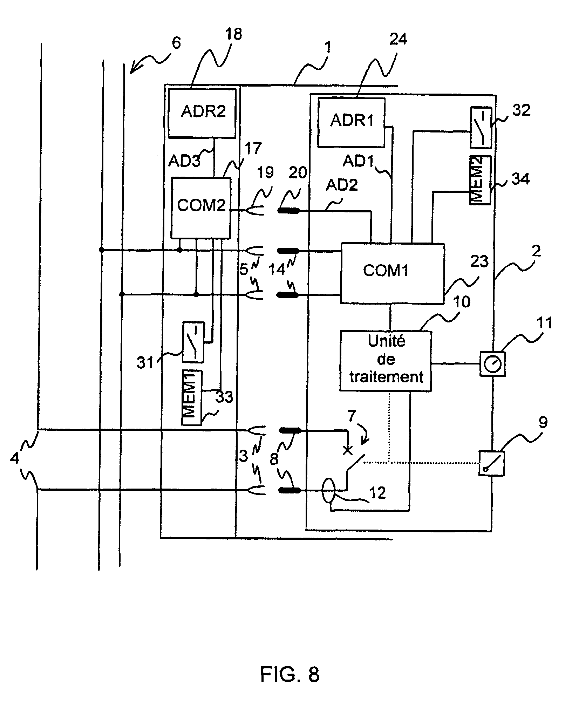

La figure 8 montre un mode de réalisation préférentiel de l'invention. La partie fixe 1 comporte un second circuit 17 de communication et le second dispositif d'adressage 18. La partie amovible comporte le premier circuit 23 de communication comportant ses deux entrées d'adresse AD1 et AD2. Le premier dispositif d'adressage 24 fournit la première adresse AD1.

Dans la partie fixe 1, le circuit de communication 17 est connecté directement au réseau de communication 6. Le second dispositif 18 d'adressage fournit une troisième adresse AD3 au second circuit de communication 17. Dans ce mode de réalisation, le circuit 17 comporte une sortie d'adresse fournissant au premier circuit 23 de communication la valeur de la seconde adresse AD2. La liaison entre la sortie d'adresse du circuit 17 et l"entrée de la seconde adresse du circuit 23 est réalisée à travers les connecteurs 19 et les contacts 20.

La valeur de l'adresse AD2 est définie par rapport à la valeur de l'adresse AD3 fournie par le dispositif d'adressage 18. De préférence, l'adresse AD2 est identique à l'adresse AD3 fournie par le dispositif 18. Les deux circuits de communication 17 et 23 communiqueront ainsi sur le réseau 6 avec la même adresse. Le circuit 23 utilise soit l'adresse AD1 en utilisation permanente, soit l'adresse AD2 en utilisation amovible comme le circuit 23 des figures 4 et 5.

Ce mode de réalisation est particulièrement utile lorsque la partie fixe doit communiquer des informations au réseau 6 de communication. La partie fixe de la figure 8 comporte des premiers capteurs d'état 31 connectés à une entrée du second circuit de communication 17. Ces capteurs 31 fournissent des informations sur l'état de la partie fixe, notamment des informations concernant la présence ou l'absence de partie amovible, ou sur le verrouillage empêchant la mise en place de partie amovible.

La partie amovible 2 comporte des seconds capteurs d'états 32 connectés au premier circuit de communication 23. Les seconds capteurs 32 fournissent au circuit 23 des informations concernant l'état de la partie amovible. Si la partie amovible est un disjoncteur débrochable, les capteurs 32 indiquent au circuit 23 notamment l'état ouvert ou fermé des contacts principaux et/ou les causes de l'ouverture de l'appareil. Ces causes d'ouverture sont par exemple, l'ouverture manuelle, l'ouverture par le déclencheur sur défaut ou l'ouverture par une télécommande à distance ou par des circuits auxiliaires.

Selon un développement des modes de réalisation de l'invention tels que décrit précédemment; le premier circuit 33 de mémorisation est connecté au second circuit 17 de communication. Le circuit 33 de mémorisation permet de stocker des données d'initialisation et des paramètres de fonctionnement destinés à être utilisés par le premier circuit 23 de communication.

Les données d'initialisation comprennent par exemple, les paramètres de réglage de l'unité de traitement, l'identification du type d'appareil de la partie amovible, son calibre nominal et/ou la dernière valeur du courant qui a traversé l'appareil. Pour un disjoncteur les paramètres de réglage servent à définir les seuils et les temporisations de courbes de déclenchement.

Lors de l'initialisation du circuit 23 de communication, le circuit 17 fournit une valeur d'adresse AD2 au circuit 23, lit des données dans le circuit de mémorisation 33 et transfère ces données au circuit 23 pour qu'il puisse compléter l'initialisation des données et des paramètres de fonctionnement.

La partie amovible 2 comporte un second circuit 34 de mémorisation connecté au premier circuit 23 de communication. Ce circuit 34 permet le stockage de données fournies par le premier circuit 33 de mémorisation.

Les données d'initialisation peuvent être générées ou modifiées par l'unité de traitement. Par exemple, lors d'une première initialisation du premier circuit 23 d'une première partie amovible 1, l'unité de traitement envoie des données d'initialisation au circuit 23. Ensuite, le circuit 23 les stocke dans le circuit 34 et/ou les envoie au circuit 17 de la partie fixe 1. Le circuit 17 stocke les données dans le circuit de mémorisation 33 associé.

Lorsqu'il y a un remplacement ou un nouveau branchement d'une partie amovible 2, le circuit 17 de communication envoie l'adresse AD2 et les données stockées dans le circuit 33 au nouveau circuit 23 de communication. Le circuit 23 initialise ces paramètres de fonctionnement, stocke les données dans le circuit 34 associé et communique avec le réseau 6 et l'unité de traitement 10.

Les données peuvent être envoyées à l'unité de traitement et de nouvelles données fournies par l'unité de traitement peuvent être modifiées ou être ajoutées à celles déjà stockées.

Des données d'initialisation peuvent être fournies par un dispositif d'initialisation autre que l'unité de traitement ou être reçues à travers le réseau de communication 6.

La partie amovible est, de préférence, un disjoncteur ou un interrupteur de type débrochable pouvant être installés dans une partie fixe telle qu'un support ou un châssis. Cependant, l'invention peut être appliquée à d'autres appareils électriques.

Dans les modes de réalisation de l'invention décrits ci-dessus, les connexions entre le circuit de communication de la partie amovible et les éléments de la partie fixe sont réalisés à l'aide de connecteurs 5, 19, 21 et de contacts électriques 14, 20, 22. Mais, il est possible de réaliser des appareils selon l'invention comportant des liaisons isolées électriquement, entre les circuits de communication de la partie amovible et des éléments de la partie fixe. Ces liaisons peuvent être, par exemple, réalisées par couplage optique ou par rayonnement électromagnétique.

## Revendications

1. Appareillage électrique débrochable comportant :
- une partie fixe (1) formant un support et connectée à un réseau (4) de distribution électrique,
- une partie amovible (2) débrochable installée dans la partie fixe et comportant au moins un appareil (7) électrique de coupure susceptible d'être connecté au réseau de distribution électrique à travers la partie fixe, et une unité de traitement (10) associée audit appareil électrique de coupure et recevant des signaux représentatifs de courants électriques, et
- des premiers moyens de connexion (3, 8) susceptibles d'être facilement connectés et déconnectés pour connecter l'appareil électrique de coupure de la partie amovible (2) à la partie fixe (1) et au réseau (4) de distribution électrique,
appareillage électrique **caractérisé en ce qu'**il comporte :
- des moyens de paramétrage (18, 33) disposés dans la partie fixe pour paramétrer l'unité de traitement (10) de la partie amovible, lesdits moyens de paramétrage fournissant à l'unité de traitement des paramètres de fonctionnement,
- des moyens de liaison (5, 14, 19, 20, 21, 22, 35, 36) pour relier lesdits moyens de paramétrage de la partie fixe à ladite unité de traitement de la partie amovible,
- un premier circuit (23) de communication situé dans la partie (2) amovible et connecté à l'unité de traitement (10) et au réseau (6) de communication à travers des moyens (5, 14) de connexion susceptibles d'être facilement connectés et déconnectés,
- des premiers moyens (24) d'adressage situés dans la partie amovible et connectés au premier circuit (23) de communication, lesdits premiers moyens d'adressage fournissant une première adresse (AD1) au premier circuit de communication, et
- un dispositif d'adressage fixe (17, 18), situés dans la partie fixe, destiné à être connecté au premier circuit (23) de communication de la partie amovible pour fournir une seconde adresse (AD2) au premier circuit de communication,
ledit premier circuit (23) de communication utilisant en priorité ladite seconde adresse (AD2) si elle est valide ou ladite première adresse (AD1) si ladite seconde adresse n'est pas valide.

2. Appareillage électrique selon la revendication 1 **caractérisé en ce que** lesdits moyens de paramétrage comportent des premiers moyens de mémorisation (33).

3. Appareillage électrique selon l'une des revendications 1 ou 2 **caractérisé en ce que** lesdits moyens de paramétrage fournissent des paramètres représentatifs de seuils de courant et de valeurs de temporisations.

4. Appareillage électrique selon l'une des revendications 2 ou 3 **caractérisé en ce que** l'unité de traitement (10) fournit aux premiers moyens de mémorisation des paramètres à mémoriser avant la déconnexion des premiers moyens de connexion.

5. Appareillage électrique selon l'une quelconque des revendications 1 à 4 **caractérisé en ce que** l'unité de traitement (10) comporte des moyens pour traiter des fonctions de protection électrique.

6. Appareillage électrique selon l'une quelconque des revendications 1 à 5 **caractérisé en ce que** :
- le premier circuit (23) de communication comporte une première et une seconde entrée d'adresse,
- les premiers moyens (24) d'adressage situés dans la partie amovible sont connectés à la première entrée d'adresse du premier circuit (23) de communication, lesdits premiers moyens d'adressage fournissant une première adresse (AD1) au premier circuit de communication, et
- le dispositif d'adressage fixe comporte :
- un second circuit (17) de communication, situé dans la partie fixe (2), connecté au réseau (6) de communication et comportant une sortie d'adresse connectée à la seconde entrée d'adresse du premier circuit (23) de communication, le second circuit (17) de communication fournissant une seconde adresse (AD2) au premier circuit (23) de communication, et
- des seconds moyens (18) d'adressage, situés dans la partie fixe, connectés au second circuit (17) de communication de la partie fixe, lesdits seconds moyens (18) d'adressage fournissant une troisième adresse (AD3) au second circuit de communication.

7. Appareillage électrique selon la revendication 6 **caractérisé en ce que** la seconde adresse (AD2) fournie par le second circuit (17) de communication au premier (23) circuit de communication est identique à la troisième adresse (AD3) fournie par les seconds moyens (18) d'adressage au second circuit (17) de communication.

8. Appareillage électrique selon l'une quelconque des revendications 1 à 7 **caractérisé en ce que** le premier circuit (23) de communication comporte une adresse (ADCOM) de communication et des moyens (25-28) d'initialisation de ladite adresse de communication, les moyens d'initialisation initialisant l'adresse (ADCOM) de communication en priorité à une valeur égale à la valeur de la seconde adresse (AD2) reçue sur la seconde entrée d'adressage ou, si la seconde adresse n'est pas valide, à la valeur de la première adresse (AD1) reçue sur la première entrée.

9. Appareillage électrique selon l'une quelconque des revendications 6 à 8 **caractérisé en ce qu'**il comporte des premiers contacts (31) d'état situés dans la partie fixe et connectés au second circuit (17) de communication.

10. Appareillage électrique selon l'une quelconque des revendications 6 à 9 **caractérisé en ce que** les premiers moyens de mémorisation (33) sont situés dans la partie fixe et connectés au second circuit (17) de communication.

11. Appareillage électrique selon la revendication 10 **caractérisé en ce que** les premiers moyens de mémorisation (33) reçoivent du réseau de communication (6) des paramètres de fonctionnement initiaux.

12. Appareillage électrique selon l'une quelconque des revendications 2 à 11 **caractérisé en ce que** les premiers moyens de mémorisation (33) mémorisent des paramètres de fonctionnement à chaque réglage de l'unité de traitement par des moyens de réglage (11).

13. Appareillage électrique selon l'une quelconque des revendications 1 à 12 **caractérisé en ce qu'**il comporte des seconds contacts (32) d'état situés dans la partie amovible et connectés au premier circuit (23) de communication.

14. Appareillage électrique selon l'une quelconque des revendications 1 à 13 **caractérisé en ce qu'**il comporte des seconds moyens (34) de mémorisation situés dans la partie amovible et connectés au premier circuit (23) de communication.

15. Appareillage électrique selon l'une quelconque des revendications 1 à 14 **caractérisé en ce que** la partie amovible est un disjoncteur de type débrochable.

16. Procédé d'initialisation d'un circuit de communication d'un appareillage électrique comprenant une partie fixe et une partie amovible selon l'une quelconque des revendications 1 à 15 **caractérisé en ce que** un premier circuit de communication situé dans la partie amovible
- lit, dans une première étape (25), la valeur d'une seconde adresse (AD2) d'un dispositif d'adressage fixe situé dans la partie fixe,
- contrôle, dans une seconde étape (26), la validité de la seconde adresse (AD2),
- charge, lors d'une troisième étape (27), une adresse de communication (ADCOM) avec la valeur de la seconde adresse si ladite seconde adresse est valide,
- lit, dans une quatrième étape (28), la valeur d'une première adresse (AD1) de moyens d'adressage situés dans la partie amovible si la seconde adresse (AD2) n'est pas valide, et
- charge lors d'une cinquième étape (29), l'adresse de communication (ADCOM) avec la valeur de la première adresse (AD1).

## Patentansprüche

1. Steckbares elektrisches Schaltgerät mit
einem als Trägersockel ausgebildeten und an ein elektrisches Verteilernetz (4) angeschlossenen feststehenden Teil (1),
einem steckbaren beweglichen Teil (2), der im feststehenden Teil installiert ist und mindestens ein elektrisches Schaltgerät (7), welches dazu dient, über den feststehenden Teil mit dem elektrischen Verteilernetz verbunden zu werden, sowie eine Verarbeitungseinheit (10) umfaßt, die dem genannten elektrischen Schaltgerät zugeordnet ist und elektrische Ströme abbildende Signale empfängt,
- sowie ersten Verbindungsmitteln (3, 8), die auf einfache Weise verbunden und getrennt werden können, um das elektrische Schaltgerät des beweglichen Teils (2) mit dem feststehenden Teil (1) sowie mit dem elektrischen Verteilernetz (4) zu verbinden,
**dadurch gekennzeichnet, daß** es folgende Teile umfaßt:
- im feststehenden Teil angeordnete Parametriermittel (18, 23) zur Parametrierung der Verarbeitungseinheit (10) des beweglichen Teils, welche Parametriermittel Betriebsparameter an die Verarbeitungseinheit liefern,
- Verbindungsmittel (5, 14, 19, 20, 21, 22, 35, 36) zur Verbindung der genannten Parametriermittel des feststehenden Teils mit der Verarbeitungseinheit des beweglichen Teils,
- eine im beweglichen Teil (2) angeordnete erste Kommunikationsschaltung (23), die mit der Verarbeitungseinheit (10) und dem Kommunikationsnetz (6) über Verbindungsmittel (5, 14) verbunden ist, die auf einfache Weise verbunden und getrennt werden können,
- im beweglichen Teil angeordnete und an die erste Kommunikationsschaltung (23) angeschlossene erste Adressiermittel (24), welche ersten Adressiermittel eine erste Adresse (AD1) an die erste Kommunikationsschaltung liefern, und
- eine im feststehenden Teil angeordnete ortsfeste Adressiereinrichtung (17, 18), die dazu dient, mit der ersten Kommunikationsschaltung (23) des beweglichen Teils verbunden zu werden, um eine zweite Adresse (AD2) an die erste Kommunikationsschaltung zu liefern, wobei
die genannte erste Kommunikationsschaltung (23) prioritär die genannte zweite Adresse (AD2) verwendet, sofern diese gültig ist, bzw. die genannte erste Adresse (AD1) verwendet, wenn die genannte zweite Adresse nicht gültig ist.

2. Elektrisches Schaltgerät nach Anspruch 1, **dadurch gekennzeichnet, daß** die genannten Parametriermittel erste Speichermittel (33) umfassen.

3. Elektrisches Schaltgerät nach Anspruch 1 oder 2, **dadurch gekennzeichnet, daß** die genannten Parametriermittel Ansprechströme und Verzögerungswerte abbildende Parameter liefern.

4. Elektrisches Schaltgerät nach einem der Ansprüche 2 oder 3, **dadurch gekennzeichnet, daß** die Verarbeitungseinheit (10) Parameter an die ersten Speichermittel liefert, die vor der Trennung der ersten Verbindungsmittel gespeichert werden.

5. Elektrisches Schaltgerät nach irgendeinem der Ansprüche 1 bis 4, **dadurch gekennzeichnet, daß** die Verarbeitungseinheit (10) Mittel zur Verarbeitung elektrischer Schutzfunktionen umfaßt.

6. Elektrisches Schaltgerät nach irgendeinem der Ansprüche 1 bis 5, **dadurch gekennzeichnet, daß**
- die erste Kommunikationsschaltung (23) einen ersten und einen zweiten Adreßeingang umfaßt,
- die im beweglichen Teil angeordneten ersten Adressiermittel (24) mit dem ersten Adreßeingang der ersten Kommunikationsschaltung (23) verbunden sind, wobei die genannten ersten Adressiermittel eine erste Adresse (AD1) an die erste Kommunikationsschaltung (23) liefern, und
- die ortsfeste Adressiereinrichtung
- eine im feststehenden Teil (1) angeordnete zweite Kommunikationsschaltung (17), welche an das Kommunikationsnetz (6) angeschlossen ist und einen, mit dem zweiten Adreßeingang der ersten Kommunikationsschaltung (23) verbundenen Adreßausgang umfaßt, wobei die zweite Kommunikationsschaltung (17) eine zweite Adresse (AD2) an die erste Kommunikationsschaltung (23) liefert,
- sowie im feststehenden Teil angeordnete und an die zweite Kommunikationsschaltung (17) des feststehenden Teils angeschlossene zweite Adressiermittel (18) umfaßt, welche zweiten Adressiermittel (18) eine dritte Adresse (AD3) an die zweite Kommunikationsschaltung liefern.

7. Elektrisches Schaltgerät nach Anspruch 6, **dadurch gekennzeichnet, daß** die von der zweiten Kommunikationsschaltung (17) an die erste Kommunikationsschaltung (23) gelieferte zweite Adresse (AD2) mit der von den zweiten Adressiermitteln (18) an die zweite Kommunikationsschaltung (17) gelieferten dritten Adresse (AD3) identisch ist.

8. Elektrisches Schaltgerät nach irgendeinem der Ansprüche 1 bis 7, **dadurch gekennzeichnet, daß** die erste Kommunikationsschaltung (23) eine Kommunikationsadresse (ADCOM) sowie Mittel (25-28) zur Initialisierung der genannten Kommunikationsadresse umfaßt, wobei die Initialisierungsmittel die Kommunikationsadresse (ADCOM) prioritär auf einen Wert initialisieren, der dem Wert der vom zweiten Adreßeingang empfangenen zweiten Adresse (AD2) entspricht, und auf den Wert der vom ersten Eingang empfangenen ersten Adresse (AD1) initialisieren, falls die zweite Adresse nicht gültig ist.

9. Elektrisches Schaltgerät nach irgendeinem der Ansprüche 6 bis 8, **dadurch gekennzeichnet, daß** es im feststehenden Teil angeordnete und mit der zweiten Kommunikationsschaltung (17) verbundene erste Betriebszustandskontakte (31) umfaßt.

10. Elektrisches Schaltgerät nach irgendeinem der Ansprüche 6 bis 9, **dadurch gekennzeichnet, daß** die ersten Speichermittel (33) im feststehenden Teil angeordnet und mit der zweiten Kommunikationsschaltung (17) verbunden sind.

11. Elektrisches Schaltgerät nach Anspruch 10, **dadurch gekennzeichnet, daß** die ersten Speichermittel (33) vom Kommunikationsnetz (6) Anfangs-Betriebsparameter empfangen.

12. Elektrisches Schaltgerät nach irgendeinem der Ansprüche 2 bis 11, **dadurch gekennzeichnet, daß** die ersten Speichermittel bei jeder Einstellung der Verarbeitungseinheit mit Hilfe von Einstellmitteln (11) Betriebsparameter speichern.

13. Elektrisches Schaltgerät nach irgendeinem der Ansprüche 1 bis 12, **dadurch gekennzeichnet, daß** es im beweglichen Teil angeordnete und mit der ersten Kommunikationsschaltung (23) verbundene zweite Betriebszustandskontakte (32) umfaßt.

14. Elektrisches Schaltgerät nach irgendeinem der Ansprüche 1 bis 13, **dadurch gekennzeichnet, daß** es im beweglichen Teil angeordnete und mit der ersten Kommunikationsschaltung (23) verbundene zweite Speichermittel (34) umfaßt.

15. Elektrisches Schaltgerät nach irgendeinem der Ansprüche 1 bis 14, **dadurch gekennzeichnet, daß** der bewegliche Teil als steckbarer Leistungsschalter ausgebildet ist.

16. Initialisierungsprozeß einer Kommunikationsschaltung eines elektrischen Schaltgeräts mit einem feststehenden und einem beweglichen Teil gemäß irgendeinem der Ansprüche 1 bis 15, **dadurch gekennzeichnet, daß** eine im beweglichen Teil angeordnete erste Kommunikationsschaltung
- in einem ersten Schritt (25) den Wert einer zweiten Adresse (AD2) einer im feststehenden Teil ortsfest angeordneten Adressiereinrichtung einliest,
- in einem zweiten Schritt (26) die Gültigkeit der zweiten Adresse (AD2) überprüft,
- in einem dritten Schritt (27) eine Kommunikationsadresse (ADCOM) mit dem Wert der zweiten Adresse lädt, sofern die genannte Adresse gültig ist,
- in einem vierten Schritt (28) den Wert einer, von Adressiermitteln im beweglichen Teil gelieferten ersten Adresse (AD1) einliest, wenn die zweite Adresse (AD2) ungültig ist, und
- in einem fünften Schritt (29), die Kommunikationsadresse (ADCOM) mit dem Wert der ersten Adresse (AD1) lädt.

## Claims

1. A plug-in electrical switchgear apparatus comprising:
- a fixed part (1) forming a support and connected to an electrical power distribution system (4),
- a plug-in removable part (2) installed in the fixed part and comprising at least one electrical switchgear apparatus designed to be connected to the electrical power distribution system via the fixed part, and a processing unit (10) associated to said electrical switchgear apparatus and receiving signals representative of electrical currents, and
- first connecting means (3, 8) designed to be easily connected and disconnected to connect the electrical switchgear apparatus of the removable part (2) to the fixed part (1) and to the electrical power distribution system (4),
an electrical switchgear apparatus **characterized in that** it comprises:
- parameter setting means (18, 33) located in the fixed part to set the parameters of the processing unit (10) of the removable part, said parameter setting means supplying operating parameters to the processing unit,
- connecting means (5, 14, 19, 20, 21, 22, 35, 36) to connect said parameter setting means of the fixed part to said processing unit of the removable part,
- a first communication circuit (23) located in the removable part (2) and connected to the processing unit (10) and to the communication network (6) by means of connecting means (5, 14) able to be easily connected and disconnected,
- first addressing means (24) located in the removable part and connected to the first communication circuit (23), said first addressing means supplying a first address (AD1) to the first communication circuit, and
- a fixed addressing device (17, 18) located in the fixed part and designed to be connected to the first communication circuit (23) of the removable part to supply a second address (AD2) to the first communication circuit,
said first communication circuit (23) using said second address (AD2) in priority if the latter is valid or said first address (AD1) if said second address is not valid.

2. The electrical switchgear apparatus according to claim 1 **characterized in that** said parameter setting means comprise first storage means (33).

3. The electrical switchgear apparatus according to one of the claims 1 or 2 **characterized in that** said parameter setting means supply parameters representative of current thresholds and time delay values.

4. The electrical switchgear apparatus according to one of the claims 2 or 3 **characterized in that** the processing unit (10) supplies the first storage means with parameters to be stored in memory before disconnection of the first connecting means.

5. The electrical switchgear apparatus according to any one of the claims 1 to 4 **characterized in that** the processing unit (10) comprises means for processing electrical protection functions.

6. The electrical switchgear apparatus according to any one of the claims 1 to 5 **characterized in that**:
- the first communication circuit (23) comprises a first and second address input,
- the first addressing means (24) located in the removable part are connected to the first address input of the first communication circuit (23), said first addressing means supplying a first address (AD1) to the first communication circuit, and
- the fixed addressing device comprises:
- a second communication circuit (17) situated in the fixed part (2) and connected to the communication network (6) and comprising an address output connected to the second address input of the first communication circuit (23), the second communication circuit (17) supplying a second address (AD2) to the first communication circuit (23), and
- second addressing means (18) situated in the fixed part and connected to the second communication circuit (17) of the fixed part, said second addressing means (18) supplying a third address (AD3) to the second communication circuit.

7. The electrical switchgear apparatus according to claim 6 **characterized in that** the second address (AD2) supplied by the second communication circuit (17) to the first communication circuit (23) is identical to the third address (AD3) supplied to the second communication circuit (17) by the second addressing means (18).

8. The electrical switchgear apparatus according to any one of the claims 1 to 7 **characterized in that** the first communication circuit (23) comprises a communication address (ADCOM) and initialization means (25-28) for initializing said communication address, the initialization means initializing the communication address (ADCOM) in priority to a value equal to the value of the second address (AD2) received on the second addressing input or, if the second address is not valid, to the value of the first address (AD1) received on the first input.

9. The electrical switchgear apparatus according to any one of the claims 6 to 8 **characterized in that** it comprises first status contacts (31) situated in the fixed part and connected to the second communication circuit (17).

10. The electrical switchgear apparatus according to any one of the claims 6 to 9 **characterized in that** the first storage means (33) are situated in the fixed part and connected to the second communication circuit (17).

11. The electrical switchgear apparatus according to claim 10 **characterized in that** the first storage means (33) receive initial operating parameters from the communication network (6).

12. The electrical switchgear apparatus according to according to any one of the claims 2 to 11 **characterized in that** the first storage means (33) store operating parameters at each setting of the processing unit by setting means (11).

13. The electrical switchgear apparatus according to any one of the claims 1 to 12 **characterized in that** it comprises second status contacts (32) located in the removable part and connected to the first communication circuit (23).

14. The electrical switchgear apparatus according to any one of the claims 1 to 13 **characterized in that** it comprises second storage means (34) situated in the removable part and connected to the first communication circuit (23).

15. The electrical switchgear apparatus according to any one of the claims 1 to 14 **characterized in that** the removable part is a circuit breaker of plug-in type.

16. An initialization procedure of a communication circuit of an electrical switchgear apparatus comprising a fixed part and a removable part according to any one of the claims 1 to 15 **characterized in that** a first communication circuit located in the removable part:
- in a first step (25) reads the value of a second address (AD2) of a fixed addressing device located in the fixed part,
- in a second step (26) checks the validity of the second address (AD2),
- in a third step (27) loads a communication address (ADCOM) with the value of the second address if said second address is valid,
- in a fourth step (28) reads the value of a first address (AD1) of addressing means located in the removable part if the second address (AD2) is not valid, and
- in a fifth step(29) loads the communication address (ADCOM) with the value of the first address (AD1).
